# EUROPEAN PATENT SPECIFICATION

(11) **EP 1 588 031 B1**
(45) Date of publication and mention of the grant of the patent: **24.05.2006**
(21) Application number: 03779983.0
(22) Date of filing: 18.11.2003
(51) Int. Cl.: F01M 13/04, B01D 50/00

(54) **FLUID SEPARATOR DEVICE**
FLUIDTRENNVORRICHTUNG
DISPOSITIF POUR LA SEPARATION DES FLUIDES

(30) Priority: 28.01.2003 IT RE20030009
(43) Date of publication of application: 26.10.2005
(73) Proprietor: UFI Filters S.p.A., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2003/012922
(87) International publication number: WO 2004/067148

(56) References cited:
- WO-A-00/68548
- WO-A-01/90540
- DE-C- 3 701 587
- US-A1- 2001 005 986
- PATENT ABSTRACTS OF JAPAN vol. 17, no. 534, 27 September 1993 (1993-09-27) -& JP 05 141815 A (MITSUBISHI HEAVY IND LTD), 8 June 1993 (1993-06-08)
- PATENT ABSTRACTS OF JAPAN vol. 1996, no. 10, 31 October 1996 (1996-10-31) & JP 08 144733 A (TOKAI RUBBER IND), 4 June 1996 (1996-06-04)

## Description

### TECHNICAL FIELD

This invention relates in general to a device for separating fluids of different density, and in particular a fluid mixture consisting of the recirculated gases of an internal combustion engine.

### BACKGROUND ART

In internal combustion engines the burnt gases are known to leak back into the cylinder lower chambers either because of seepage past the piston rings or because of imperfect connections.

Generally these gases are fed to the engine intake conduit, which then returns them to the cylinders for combustion via an appropriate conduit. It happens however than in the cylinder lower chambers the gases come into contact with the oil present in the engine oil sump, and mix with part thereof. Hence the engine intake conduit also receives oil particles which are damaging in that, in addition to soiling the various components with which they come into contact, they are highly polluting from the environmental viewpoint.

The document PATENT ABSTRACTS OF JAPAN vol.17, no. 534 describes a separating device for separating oil from the recirculated gases of an internal combustion engine, comprising a gas entry associated with the engine exhaust pipe, a gas exit conduit associated with the engine intake conduit and a cyclone separator for separating oil entrained with the gases.

The object of the present invention is to overcome the aforesaid drawbacks within the framework of a simple and rational solution.

### DISCLOSURE OF THE INVENTION

The invention provides a device for separating oil from the recirculated gases of an internal combustion engine, comprising an outer casing provided with at least one gas entry conduit associated with the usual gas exhaust pipe present in the engine, and a gas exit conduit associated with the engine intake conduit, and comprising in its interior at least one cyclone separator for separating the oil entrained by the gases, characterised in that said cyclone separator comprises two internally hollow frusto-conical bodies partly inserted one into the other, to define a passageway for the gas mixed with oil which enters a lower chamber through the entry.

In particular, the invention provides a fluid separator device able to separate said burnt gases from the oil particles which said gases entrain when they come into contact with the oil in the engine oil sump. The device is inserted into the usual gas recirculation conduit with which internal combustion engines are provided, and which connects the cylinder lower chamber to the engine intake conduit.

The device of the invention comprises an outer casing provided with at least one gas mixture entry conduit associated with said recirculation conduit for the gas mixture present in the engine, and a gas exit conduit associated with the engine intake conduit, and comprising internally at least one cyclone separator.

According to a preferred embodiment of the invention, the device also comprises a coalescence separator in addition to the cyclone separator; said cyclone separator and the coalescence separator are positioned respectively in two adjacent communication chambers, of which one is upper and one lower, said lower chamber being associated with said gas mixture entry conduit, and said upper chamber being associated with the exit conduit for the mixture gases.

According to the invention, said cyclone separator comprises two internally hollow frusto-conical bodies partly inserted one into the other, to define a passageway for the gas and oil mixture which enters said lower chamber through the entry. The separated oil is collected on the base of the lower chamber where a conduit is preferably present to connect said chamber to the engine oil sump. The mixture of gases and any oil not separated by the cyclone separator rises towards the upper chamber and passes through said coalescence separator which is provided with an appropriate filter means for retaining the micro-droplets of oil, which fall downwards by virtue of their weight.

Any oil droplets which pass through the coalescence separator fall by their own weight onto the base of said second chamber, and from there onto the base of said lower first chamber via a non-return valve which opens under the weight of the droplets.

The gas leaves through the exit conduit.

In a preferred embodiment of the invention, a blow-by valve, positioned in a third chamber communicating with said second chamber, is associated with the gas exit conduit.

The invention can also be provided with an engine oil top-up conduit opening in proximity to said first chamber external to the cyclone separator.

The invention is described in detail hereinafter with the aid of the accompanying figure which illustrates one embodiment thereof by way of non-limiting example.

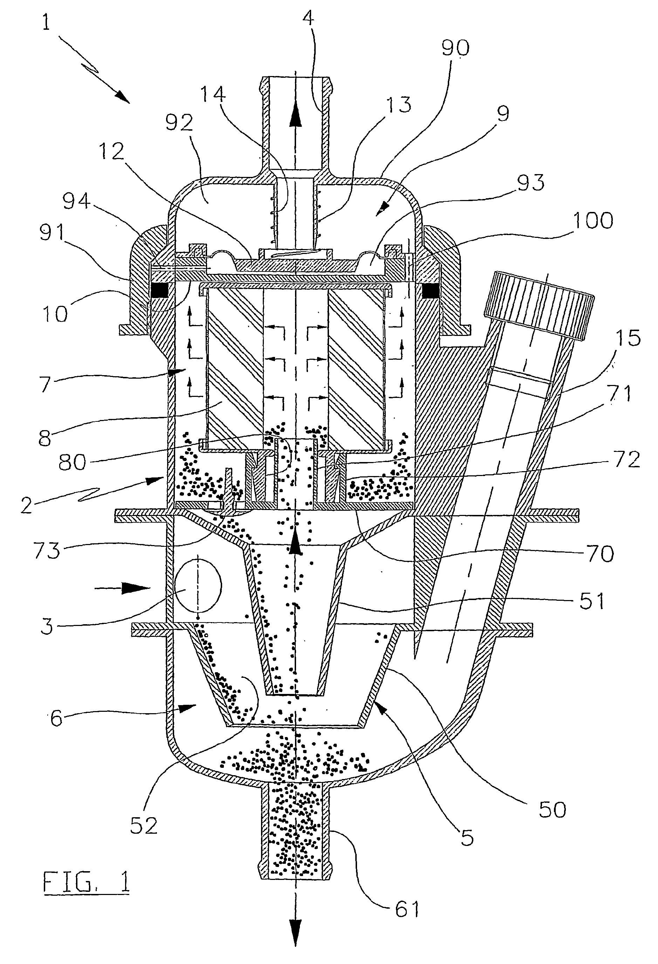

Figure 1 is a section through device of the invention.

Figure 1 shows the device 1 intended to be inserted into the circuit that connects the exhaust of the burnt gas and oil mixture to the engine fuel intake conduit (neither shown). The device 1 comprises an outer casing 2 having an entry conduit 3, through which said burnt gas and oil mixture enters the device, and an exit conduit 4, through which the burnt gases leave alone.

Within said casing 2 a cyclone separator 5 is present, located in a lower first chamber 6. The separator 5 comprises two internally hollow frusto-conical bodies 50 and 51, partly inserted into each other to define a passageway 52 for the gas and oil mixture which enters the chamber 6 through the entry 3. The gas and oil mixture is separated in contact with the walls of the two conical bodies, with the oil falling onto the base of the chamber 6 which hence acts as a collection vessel. The oil collected in the chamber is then fed to the engine oil sump, not shown, through an exit conduit 61.

Above the chamber 6 there is located a second chamber 7 separated from the first by a base 70 which also acts as a support element for a filter means 8 present in the chamber 7. The filter means 8 is a coalescence separator and is composed of a baffle which coalesces the oil micro-droplets so as to collect them by virtue of their weight. In this respect the base 70 presents a conduit 71 arranged to connect the first chamber 6 to the second 7, on the outside of this conduit there being present a plurality of circumferentially disposed teeth 72 for the engagement of matching teeth 80 of the filter means 8.

A non-return valve 73 of mushroom type, the operation of which will be clarified hereinafter, is present in the base 70, beyond the teeth 72.

Above the chamber 7 there is an upper third chamber 9, separated from the chamber 7 by a plate 10. The two chambers 7 and 9 communicate via a plurality of holes 100, only one of which is visible in the figures, they being disposed circumferentially in proximity to the outer edge of the plate 10.

For exit of the burnt gases from which the oil has been separated, the chamber 9 presents a conduit 4 connected to the fuel intake conduit with which the engine is provided, not shown.

In detail the chamber is defined by an inverted cup-shaped body 90, which upperly presents said exit conduit 4, and rests on the edge of said casing 2 to which it is rigidly fixed by an external ring nut 91.

Inside the chamber 9 there is a valve 12 of membrane type, operating against the action of a spring 13. As can be seen from figure 1, the spring 13 is positioned between the upper surface of said valve 12 and the base of said cup-shaped body 90, said spring being mounted on a hollow cylindrical stem 14 projecting into the chamber 9 from said exit conduit 4.

The membrane valve 12 divides the volume of the chamber 9 into two parts 92 and 93, of which the part 93 is maintained at atmospheric pressure by being connected to the outside of the chamber by a radial conduit 94 which opens into the outer surface of the cup-shaped body 90, in proximity to the ring nut 91.

The device 1 is also provided with an oil top-up conduit 15, positioned to the side of the casing 2 and opening in proximity to the base of the first chamber 6.

The mixture of burnt gases and oil enters the chamber 6 of the device 1 through the entry hole 3 and cyclone separator 5. In passing through the passageway 52 the mixture deposits most of its constituent oil on the separator walls, and in particular on the inner walls of the body 50. As already described the separated oil droplets fall onto the base of the device from which they are returned to the engine oil sump via the conduit 61. The mixture gas then rises towards the upper chamber 7 through the conduit 71 and through the filter means 8, which by coalescence collects those micro-droplets that have not been separated in the cyclone separator 5. Any micro-droplets that also pass through the filter means 8 fall by their own weight onto the base of the second chamber 7, from which they fall onto the base of the chamber 6 by way of the valve 73. The burnt gas from which the oil has been separated enters the upper chamber 9 via the blow-by valve 12, and leaves through the exit conduit 4 towards the engine intake conduit.

## Claims

1. A device for separating oil from the recirculated gases of an internal combustion engine, comprising an outer casing provided with at least one gas entry conduit (3) associated with the usual gas exhaust pipe present in the engine, and a gas exit conduit (4) associated with the engine intake conduit, and comprising in its interior at least one cyclone separator (5) for separating the oil entrained by the gases, **characterised in that** said cyclone separator comprises two internally hollow frusto-conical bodies (50, 51) partly inserted one into the other, to define a passageway for the gas mixed with oil which enters a lower chamber (6) through the entry (3).

2. A device as claimed in claim 1, **characterised by** also comprising a coalescence separator.

3. A device as claimed in claim 2, **characterised in that** said cyclone separator and said coalescence separator are positioned respectively in series-communicating chambers (6, 7) of said casing.

4. A device as claimed in claim 3, **characterised in that** the chamber in which said cyclone separator is located comprises said gas entry conduit (3), the base of said chamber (6) collecting the oil separated from said gases by said cyclone separator (5).

5. A device as claimed in claim 4, **characterised in that** the conduit (4) for the gases from which the oil has been separated is associated with the chamber in which said separator is located.

6. A device as claimed in claim 1, **characterised in that** the base of said casing presents a discharge conduit (61) for the oil separated from the gases.

7. A device as claimed in daim 6, **characterised in that** said discharge conduit (61) is collected to the engine oil sump.

8. A device as claimed in claim 3, **characterised in that** said chambers (6, 7) are separated by a base (70) provided with a conduit (71) connecting said chambers (6, 7) together.

9. A device as claimed in claim 8, **characterised in that** said base presents support teeth for said coalescence separator.

10. A device as claimed in claim 8, **characterised in that** said base is provided with a valve operated by the weight of the oil to enable the oil separated from the gases to pass in the direction of said first chamber (6), while preventing gas passage in the opposite direction.

11. A device as claimed in claim 2, **characterised in that** said coalescence separator comprises a filter means.

12. A device as claimed in claim 1, **characterised by** also comprising a blow-by valve (12) positioned in correspondence with said gas exit conduit.

13. A device as claimed in claims 3 and 12, **characterised in that** said blow-by valve is positioned in a third chamber (9) communicating with said second chamber (7) via at least one conduit (100).

14. A device as claimed in daim 12, **characterised in that** said blow-by valve comprises a membrane operating against the action of a spring (13).

15. A device as daimed in daim 14, **characterised in that** said membrane divides the internal volume of said third chamber (9) into two parts (92, 93), of which one (93) is maintained at atmospheric pressure by being connected to the outside of said casing by a conduit (94), and the other (92) is maintained under vacuum by the engine suction.

16. A device as claimed in claim 1, **characterised by** comprising an oil top-up conduit (15).

17. A device as claimed in claims 3 and 16, **characterised in that** said conduit (15) opens in proximity to the base of said first chamber (6).

## Patentansprüche

1. Vorrichtung zum Abscheiden von Öl aus den zurückgeführten Gasen eines Verbrennungsmotors, die ein Außengehäuse, welches mit mindestens einem Gaseingangskanal (3) versehen ist, der mit dem in dem Motor vorhandenen gewöhnlichen Auspuffrohr verbunden ist, und einen Gasausgangskanal (4) aufweist, der mit der Saugrohrleitung des Motors verbunden ist, und die in ihrem Inneren mindestens einen Zyklonabscheider (5) zum Abscheiden des durch die Gase mitgeführten Öls aufweist,
**dadurch gekennzeichnet, dass**
der Zyklonabscheider zwei innen hohle, kegelstumpfförmige Körper (50,51) aufweist, die teilweise ineinander eingesetzt sind, um einen Durchgang für das mit Öl gemischte Gas festzulegen, welches durch den Eingang (3) in eine untere Kammer (6) eintritt.

2. Vorrichtung nach Anspruch 1,
**dadurch gekennzeichnet, dass** sie ebenfalls einen Koaleszenzabscheider aufweist.

3. Vorrichtung nach Anspruch 2,
**dadurch gekennzeichnet, dass**
der Zyklonabscheider und der Koaleszenzabscheider jeweils in in Reihe miteinander verbundenen Kammern (6,7) des Gehäuses positioniert sind.

4. Vorrichtung nach Anspruch 3,
**dadurch gekennzeichnet, dass**
die Kammer, in welcher der Zyklonabscheider angeordnet ist, den Gaseingangskanal (3) aufweist, wobei die Basis der Kammer (6) das mittels des Zyklonabscheiders (5) von den Gasen abgeschiedene Öl sammelt.

5. Vorrichtung nach Anspruch 4,
**dadurch gekennzeichnet, dass**
der Kanal (4) für die Gase, von denen das Öl abgeschieden würde, mit der Kammer verbunden ist, in welcher der Abscheider angeordnet ist.

6. Vorrichtung nach Anspruch 1,
**dadurch gekennzeichnet, dass**
die Basis des Gehäuses einen Ausstoßkanal (61) für das von den Gasen abgeschiedene Öl aufweist.

7. Vorrichtung nach Anspruch 6,
**dadurch gekennzeichnet, dass**
der Ausstoßkanal (61) den Ölsumpf des Motors geführt ist.

8. Vorrichtung nach Anspruch 3,
**dadurch gekennzeichnet, dass**
die Kammern (6,7) durch eine mit einem Kanal (71) versehene Basis (70) getrennt sind, der die Kammern (6,7) miteinander verbindet.

9. Vorrichtung nach Anspruch 8,
**dadurch gekennzeichnet, dass**
die Basis Stützzähne für den Koaleszenzabscheider aufweist.

10. Vorrichtung nach Anspruch 8,
**dadurch gekennzeichnet, dass**
die Basis mit einem durch das Gewicht des Öls betriebenen Ventil versehen ist, um das von den Gasen abgeschiedene Öl in die Lage zu versetzen, in die Richtung der ersten Kammer (6) hindurchzugehen, wobei der Gasdurchgang in die entgegengesetzte Richtung verhindert wird.

11. Vorrichtung nach Anspruch 2,
**dadurch gekennzeichnet, dass**
der Koaleszenzabscheider eine Filtereinrichtung aufweist.

12. Vorrichtung nach Anspruch 1,
**dadurch gekennzeichnet, dass**
sie auch ein in Übereinstimmung mit dem Gasausgangskanal positioniertes Blow-by-Ventil (12) aufweist.

13. Vorrichtung nach den Ansprüchen 3 und 12,
**dadurch gekennzeichnet, dass**
das Blow-by-Ventil in einer dritten Kammer (9) positioniert ist, die mit der zweiten Kammer (7) über mindestens einen Kanal (100) in Verbindung steht.

14. Vorrichtung nach Anspruch 12,
**dadurch gekennzeichnet, dass**
das Blow-by-Ventil eine gegen die Wirkung einer Feder (13) wirkende Membran aufweist.

15. Vorrichtung nach Anspruch 14,
**dadurch gekennzeichnet, dass**
die Membran das Innenvolumen der dritten Kammer (9) in zwei Teile (92,93) teilt, wovon einer (93) auf atmosphärischem Druck gehalten wird, indem er mittels eines Kanals (94) mit dem Äußeren des Gehäuses verbunden ist, und der andere (92) durch die Motoransaugung unter Vakuum gehalten wird.

16. Vorrichtung nach Anspruch 1,
**dadurch gekennzeichnet, dass**
sie einen Ölnachfüllkanal (15) aufweist.

17. Vorrichtung nach den Ansprüchen 3 und 16,
**dadurch gekennzeichnet, dass**
sich der Kanal (15) in der Nähe zu der Basis der ersten Kammer (6) öffnet.

## Revendications

1. Dispositif de séparation d'huile des gaz qui recirculent d'un moteur à combustion interne, comprenant un carter externe ayant au moins un conduit (3) d'entrée de gaz associé à la tubulure habituelle d'échappement de gaz dans le moteur, et un conduit (4) de sortie du gaz associé au conduit d'admission du moteur et comprenant à l'intérieur au moins un séparateur à cyclone (5) destiné à séparer l'huile entraînée par les gaz, **caractérisé en ce que** le séparateur à cyclone comporte deux corps tronconiques creux (50, 51) insérés partiellement l'un dans l'autre afin qu'ils délimitent un passage pour le gaz mélangé à l'huile qui pénètre dans une chambre inférieure (6) par l'entrée (3).

2. Dispositif selon la revendication 1, **caractérisé en ce qu'**il comprend aussi un séparateur par coalescence.

3. Dispositif selon la revendication 2, **caractérisé en ce que** le séparateur à cyclone et le séparateur par coalescence sont disposés respectivement dans des chambres (6, 7) du carter qui communiquent en série.

4. Dispositif selon la revendication 3, **caractérisé en ce que** la chambre dans laquelle se trouve le séparateur à cyclone comporte un conduit (3) d'entrée de gaz, la base de la chambre (6) collectant l'huile séparée des gaz par le séparateur à cyclone (5).

5. Dispositif selon la revendication 4, **caractérisé en ce que** le conduit (4) destiné aux gaz dont l'huile a été séparée est associé à la chambre dans laquelle se trouve le séparateur.

6. Dispositif selon la revendication 1, **caractérisé en ce que** la base du carter présente un conduit d'évacuation (61) destiné à l'huile séparée des gaz.

7. Dispositif selon la revendication 6, **caractérisé en ce que** le conduit d'évacuation (61) est raccordé au carter d'huile du moteur.

8. Dispositif selon la revendication 3, **caractérisé en ce que** les chambres (6, 7) sont séparées par une base (70) ayant un conduit (71) qui raccorde les chambres (6, 7) l'une à l'autre.

9. Dispositif selon la revendication 8, **caractérisé en ce que** la base présente des dents de support du séparateur par coalescence.

10. Dispositif selon la revendication 8, **caractérisé en ce que** la base comporte un clapet manoeuvré par le poids de l'huile afin que l'huile séparée des gaz puisse passer dans la direction de la première chambre (6) tout en empêchant le passage des gaz dans le sens opposé.

11. Dispositif selon la revendication 2, **caractérisé en ce que** le séparateur par coalescence comprend un dispositif à filtre.

12. Dispositif selon la revendication 1, **caractérisé en ce qu'**il comprend aussi une soupape d'éruption (12) disposée afin qu'elle corresponde au conduit de sortie de gaz.

13. Dispositif selon les revendications 3 et 12, **caractérisé en ce que** la soupape d'éruption est disposée dans une troisième chambre (9) qui communique avec la seconde chambre (7) par au moins un conduit (100).

14. Dispositif selon la revendication 12, **caractérisé en ce que** la soupape d'éruption comprend une membrane fonctionnant contre l'action d'un ressort (13).

15. Dispositif selon la revendication 14, **caractérisé en ce que** la membrane divise le volume interne de la troisième chambre (9) en deux parties (92, 93) dont l'une (93) est maintenue à la pression atmosphérique en étant raccordée à l'extérieur du carter par un conduit (94), et l'autre (92) est maintenue en dépression par l'aspiration du moteur.

16. Dispositif selon la revendication 1, **caractérisé en ce qu'**il comprend un conduit (15) de débordement d'huile.

17. Dispositif selon les revendications 3 et 16, **caractérisé en ce que** le conduit (15) débouche à proximité vers la base de la première chambre (6).
